# EUROPÄISCHE PATENTSCHRIFT

(11) **EP 0 796 693 B1**
(45) Veröffentlichungstag und Bekanntmachung des Hinweises auf die Patenterteilung: **30.09.1998**
(21) Anmeldenummer: 97100838.8
(22) Anmeldetag: 21.01.1997
(51) Int. Cl.: B23D 63/18, B21D 1/06

(54) **Richtmaschine für Kreissägeblätter und dergleichen**
Machine for straightening circular saw blades and the like
Machine à planer des scies circulaires et similaires

(30) Priorität: 20.03.1996 DE 29605189 U
(43) Veröffentlichungstag der Anmeldung: 24.09.1997
(73) Patentinhaber: Mummenhoff, Heinrich, D-42855 Remscheid (DE)
(72) Erfinder: Mummenhoff, Heinrich, D-42855 Remscheid (DE)
(74) Vertreter: Patentanwälte Dr. Solf & Zapf

(56) Entgegenhaltungen:
- DE-A- 3 915 757
- DE-U- 9 313 281
- FR-A- 1 064 367
- GB-A- 2 047 146
- US-A- 4 434 644

## Beschreibung

Die vorliegende Erfindung betrifft eine Richtmaschine zum Plan-Ausrichten von kreisförmigen Scheiben, insbesondere von Kreissägeblättern bzw. Stammblättern und dergleichen, mit einer Aufspannvorrichtung für die Scheibe sowie mindestens einer maschinellen Richteinheit, wobei die Richteinheit aus einem Amboß und einem Hammer besteht, die zwischen sich einen Spalt für die Scheibe bilden und deren Wirkachse im wesentlichen senkrecht zu einer Bezugsebene der Scheibe verläuft.

Eine derartige Richtmaschine ist in dem DE-GM 93 13 281 beschrieben. Sie hat sich bereits gut bewährt, da sie ein automatisches Ausmessen von Planheitsabweichungen sowie ein unmittelbares Planrichten im aufgespannten Zustand der Scheibe ermöglicht. Das eigentliche Planrichten erfolgt hauptsächlich durch Bearbeiten der Scheibe zwischen dem Amboß und dem Hammer. Diese Bearbeitung soll durch die vorliegende Erfindung weiter verbessert werden.

Der vorliegenden Erfindung liegt somit die Aufgabe zugrunde, die bekannte Richtmaschine so zu verbessern, daß das Planrichten mit noch größerer Präzision und vorzugsweise auch mit geringerem Bearbeitungs- und Zeitaufwand durchgeführt werden kann.

Erfindungsgemäß wird dies dadurch erreicht, daß der Amboß und/oder der Hammer über (jeweils) ein Schwenklager um mindestens eine zu der Bezugsebene im wesentlichen parallele Schwenkachse frei verschwenkbar geführt sind/ist. Dabei kann es grundsätzlich ausreichend sein, wahlweise den Amboß oder den Hammer verschwenkbar auszuführen. Vorzugsweise ist der Amboß verschwenkbar, während der Hammer - bezogen auf die Wirkachse - unverschwenkbar (starr) geführt ist.

Durch die Erfindung wird erreicht, daß sich die jeweilige Oberfläche - vorzugsweise die Amboßfläche - genau an die Lage der auszurichtenden Scheibe anpassen kann. Dabei kann während des Ausrichtens auch eine Umorientierung aufgrund der Schwenkbeweglichkeit erfolgen, bis die gewünschte Planheit sehr exakt erreicht ist.

In einer bevorzugten Ausgestaltung der Erfindung weist der Amboß in seiner Amboßfläche eine längliche Flächenvertiefung auf, wobei der Hammer als längliche Hammerfinne ausgebildet ist. Die Längserstreckungsrichtung der Hammerfinne stimmt mit derjenigen der länglichen Flächenvertiefung in der Amboßfläche im wesentlichen überein. Bei dieser Ausführungsform ist dann insbesondere der Amboß um nur eine konkrete Schwenkachse verschwenkbar, und zudem sind der Amboß und der Hammer um ihre Wirkachse verdrehbar geführt, wobei die Verdrehung zwangsweise über Stellmittel bewirkt wird.

Dieser vorteilhaften Ausgestaltung liegt die Erkenntnis zugrunde, daß Planheitsabweichungen oftmals ebenfalls eine längliche Kontur aufweisen. Es können dann der Amboß und die Hammerfinne bezüglich ihrer Längserstreckung an den Längsverlauf der jeweiligen Planheitsabweichung durch Verdrehen angepaßt werden, was zu dem wesentlichen Vorteil führt, daß zum Beseitigen der Planheitsabweichung nur noch eine geringere Anzahl von Schlägen erforderlich ist (im Vergleich zu einer Ausführung mit einer im wesentlichen balligen und damit eigentlich nur punktförmig wirkenden Hammerfläche).

Weitere vorteilhafte Ausgestaltungsmerkmale der Erfindung sind in den Unteransprüchen sowie der folgenden Beschreibung enthalten.

Anhand von in den beiligenden Zeichnungen dargestellten, bevorzugten Ausführungsbeispielen bzw. Ausgestaltungsvarianten einer erfindungsgemäßen Richtmaschine soll die Erfindung nun näher erläutert werden. Dabei zeigen:
- Fig. 1: eine Aufsicht auf eine erfindungsgemäße Richtmaschine (Ansicht in Pfeilrichtung I gemäß Fig. 2),
- Fig. 2: eine Seitenansicht in Pfeilrichtung II gemäß Fig.1,
- Fig. 3: eine vergrößerte, teilgeschnittene Teil-Aufsicht in Pfeilrichtung III gemäß Fig. 2,
- Fig. 4: eine Ansicht gemäß Pfeilrichtung IV in Fig. 3 in einer bevorzugten Ausführungsform,
- Fig. 5: eine vergrößerte, teilgeschnittene Aufsicht im Bereich der Richteinheit in einer erfindungsgemäßen Ausführungsform,
- Fig. 6: eine vergrößerte Darstellung des Bereichs VI in Fig. 5,
- Fig. 7: eine schematische Draufsicht auf die Amboßfläche entsprechend der Ausführungsform gemäß Fig. 5 und 6,
- Fig. 8 und 9: jeweils eine Alternative zu Fig. 7,
- Fig. 10: eine schematische Perspektivansicht der Richteinheit in einer speziellen Ausführungsform,
- Fig. 11: eine Ansicht analog zu Fig. 5, jedoch in einer Ausführungsvariante,
- Fig. 12: eine teilgeschnittene Teil-Seitenansicht in Pfeilrichtung XII gemäß Fig. 11 und
- Fig. 13: eine Draufsicht einer zu richtenden Scheibe mit beispielhaft veranschaulichten Planheitsabweichungen.

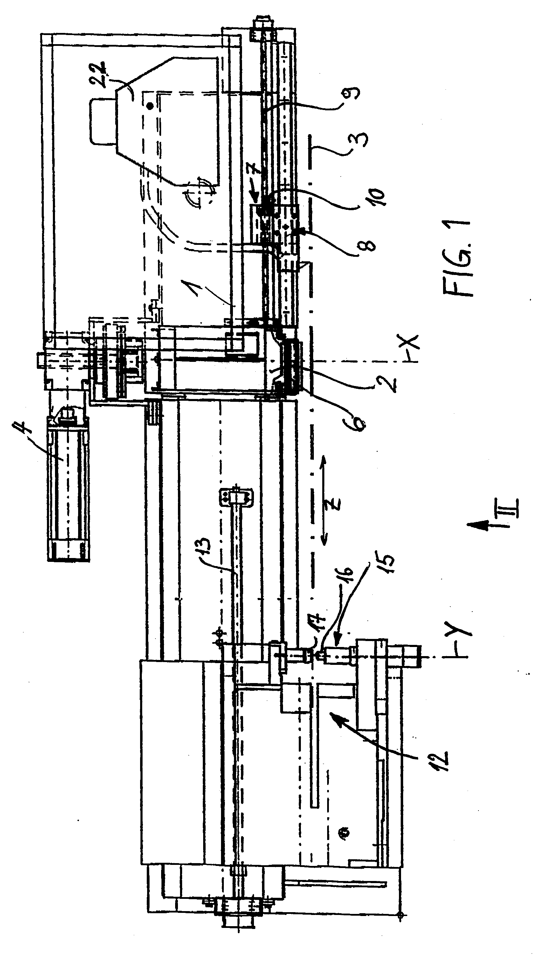

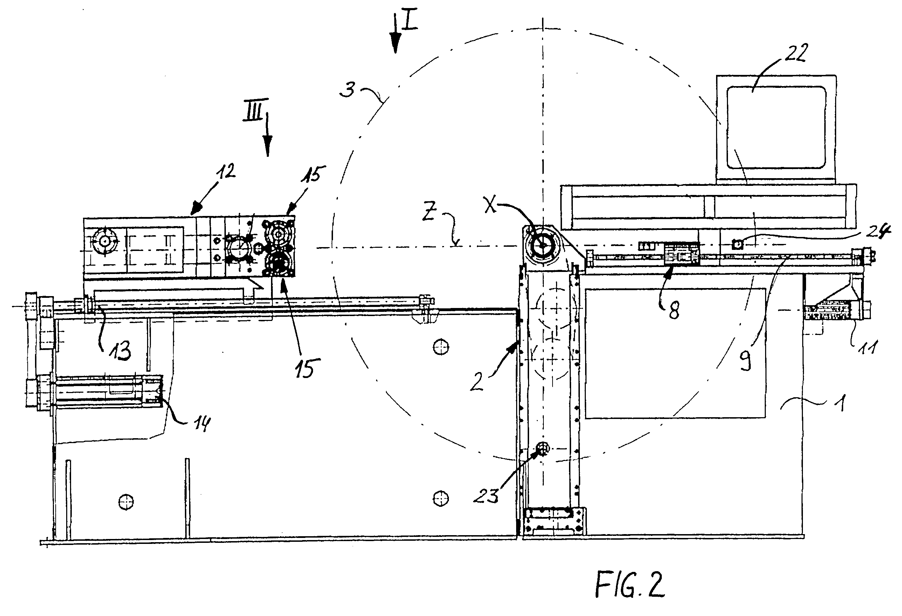

Wie sich zunächst aus Fig. 1 und 2 ergibt, besteht eine erfindungsgemäße Richtmaschine aus einem Maschinengestell 1, an dem eine Aufspannvorrichtung 2 für eine auszurichtende kreisförmige Scheibe 3 (mit Strichpunktlinien veranschaulicht), insbesondere ein Kreissägeblatt, befestigt ist. Die Aufspannvorrichtung 2 dient zweckmäßigerweise auch zum Verdrehen der aufgespannten Scheibe 3 um ihre Drehachse X, wozu die Aufspannvorrichtung 2 aus einem elektrischen Antriebsmotor 4 sowie einem mit diesem drehfest verbundenen Spannfutter 6 besteht, mit dem die Scheibe 3 aufgespannt wird. Weiterhin ist auf dem Maschinengestell 1 eine Meßvorrichtung 7 verfahrbar angeordnet. Die Meßvorrichtung 7 besteht aus einem Meßkopf 8, der auf einer Spindel 9 verschiebbar gelagert ist. Hierzu besitzt der Meßkopf 8 eine Gewindebohrung 10, die ein Innengewinde besitzt, das dem Spindelgewinde angepaßt ist. Hierdurch wird bei einer Drehung der Spindel 9 der Meßkopf 8 auf der Spindel 9 verfahren, und zwar im wesentlichen in radialer Richtung der aufgespannten Scheibe 3. Die Spindel 9 ist derart dimensioniert, daß der Verfahrweg des Meßkopfes 8 von dem äußeren Rand der Scheibe 3 bis in die unmittelbare Nähe des Spannfutters 6 reicht. Die Spindel 9 wird über einen Elektromotor 11 angetrieben. Der Meßkopf 8 ist derart geführt, daß er auf einer in bezug auf die Drehachse X der Scheibe 3 definierten Verschiebegeraden Z in radialer Richtung der Scheibe 3 verschoben wird, wobei vorzugsweise diese Verschiebegerade Z die Drehachse X schneidet. Hierdurch kann über eine entsprechende Eichung mittels eines Wegemeßsystems jeweils der genaue Abstand des Meßkopfes 8 von der Drehachse X gemessen werden. Der Meßkopf 8 beinhaltet eine Laser-Meßeinheit, wobei der Laserstrahl senkrecht auf die Scheibe 3 gerichtet austritt. Diese Laser-Meßeinheit wird jeweils auf eine bestimmte Null-Stellung geeicht. Hierbei entspricht die Null-Stellung dem Abstand der Scheibe 3 vom Meßkopf unmittelbar hinter dem Spannfutter 6, da in diesem Bereich die Scheibe 3 durch die vorgenommene Aufspannung plan ist. Die Lasermeßeinheit arbeitet nach dem Reflexionsprinzip, so daß Planheitsabweichungen von der Null-Stellung in beiden Richtungen erfaßt werden können. Weiterhin ist es vorgesehen, daß über eine entsprechende Meßeinheit die jeweilige Drehstellung der Scheibe 3, ausgehend von einer Null-Stellung gemessen wird, so daß der Ort der jeweiligen Planabweichung auf der Scheibe 3 genau in Karthesischen- oder Polar-Koordinaten gemessen, gespeichert und angezeigt werden kann. Diese Anzeige erfolgt auf einem Bildschirm-Gerät (Monitor) 22, das oberhalb der Spindel 9 angeordnet ist.

Weiterhin weist die Richtmaschine eine Richteinrichtung 12 auf. Diese Richteinrichtung 12 ist auf einer Spindel 13 verfahrbar gelagert, und zwar ebenfalls im wesentlichen in radialer Richtung der Scheibe 3. Die Spindel 13 wird über einen Elektromotor 14 angetrieben. Die Richteinrichtung 12 weist mindestens eine maschinelle Richteinheit 15 aus einem Hammer 16 und einem Amboß 17 auf. Der Hammer 16 und der Amboß 17 sind derart einander gegenüberliegend angeordnet, daß die Wirkrichtung (Achse Y) der Richteinheit 15 senkrecht zur Scheibenoberfläche verläuft. Hierbei ist der Abstand zwischen dem Hammer 16 und dem Amboß 17 derart bemessen, daß er größer ist als die Dicke der Scheibe 3. Der Hammer 16 ist mit dem Stößel eines Schlagwerks 18 verbunden, welches vorzugsweise als hydraulisches Schlagwerk in bekannter Weise hergestellt ist. Die Hammerfläche 19 des Hammers 16 ist vorzugsweise konvex gekrümmt. Der Amboß 17 kann eine ebene Amboßfläche 20 aufweisen; es ist aber besonders zweckmäßig, wenn die Amboßfläche 20 leicht konkav gekrümmt ausgebildet ist, was weiter unten noch genauer erläutert wird. Die Richteinheit 15 ist vorzugsweise um 180° versetzt zum Meßkopf 8 angeordnet. Hierdurch ist eine besonders einfache Ansteuerung der Richteinheit 15 möglich, da der Meßkopf 8 und die Richteinheit 15 auf der gemeinsamen, durch die Drehachse X der Scheibe 3 verlaufenden Verschiebegeraden Z verfahren werden. Diese Verschiebegerade Z verläuft parallel zu den Spindeln 9, 13. Demnach kann mittels der Einwirkung der erfindungsgemäßen Richteinrichtung 12 jeder beliebige Ort auf der Scheibe 3 erreicht werden, und zwar einerseits durch Verfahren der maschinellen Richteinheit 15 und andererseits durch Drehung der Scheibe 3.

Die Ansteuerung der maschinellen Richteinheit 15 erfolgt vorzugsweise automatisch über eine Ansteuereinheit, die derart programmiert ist, daß die Koordinatenwerte des Meßkopfes 8 in Verbindung mit der jeweiligen Drehstellung der Scheibe 3 auf die um 180° versetzte Anordnung der maschinellen Richteinheit 15 umgerechnet und gespeichert und zur Ansteuerung der maschinellen Richteinheit 15 ausgegeben werden. Zudem kann auch entsprechend der Amplitude der gemessenen Planheitsabweichungen die von der Richteinheit 15 erzeugte Kraft durch entsprechende Ansteuerung des Schlagwerks 18 variiert werden.

Da die Planheitsabweichungen der Scheibe 3 als Erhebungen bzw. Vertiefungen in beiden zur Scheibenebene entgegengesetzten Richtungen auftreten können (vgl. hierzu Fig. 13), und die Beseitigung dieser Abweichungen vorzugsweise ohne Umspannen der Scheibe 3 erfolgen soll, ist es zweckmäßig, wenn - wie in Fig. 4 veranschaulicht - zwei maschinelle Richteinheiten 15 jeweils aus einem Hammer 16 und einem Amboß 17 unmittelbar "übereinander" (vgl. auch Fig. 2) angeordnet sind, wobei die Hämmer 16 und die Ambosse 17 beider Schlagwerke 18 zueinander entgegengesetzt angeordnet sind, so daß die Planabweichungen in beiden Richtungen korrigiert werden können. Die maschinellen Richteinheiten 15 können gleichzeitig oder nacheinander betätigt werden. Die beiden Richteinheiten 15 sind beidseitig ("ober- und unterhalb") der Verschiebegeraden Z angeordnet (vgl. Fig. 2).

Dabei ist es zweckmäßig, wenn die beiden Richteinheiten 15 auch "kinematisch umgekehrt" wirken. Dies bedeutet, daß im einen Fall der Amboß 17 mit seiner Amboßfläche 20 - bezogen auf eine Bezugsebene B ("Nullebene") - ortsfest steht und der zugehörige Hammer 16 mit dem Schlagwerk 18 verbunden ist und daher tatsächlich "Hammerfunktion" hat. Im anderen Fall steht der Hammer 16 aber mit seiner Hammerfläche 19 - bezogen auf die Bezugsebene B - fest, während der Amboß 17 eigentlich als Hammer wirkt und hierzu mit dem Schlagwerk 18 verbunden ist. Hierdurch wird erreicht, daß die Schlagwerke 18 mit gleicher Wirkrichtung (Pfeile 18a) auf der gleichen Seite gegenüber der "Nullebene" B angeordnet sein können. Da die Scheibe 3 beim Ausrichtung über einerseits den Amboß 17 und andererseits den Hammer 16 in der "Nullebene" definiert abgestützt wird, führt diese vorteilhafte Ausgestaltung zu einer sehr genauen Planheits-Ausrichtung der Scheibe 3.

Hierbei ist es aber zweckmäßig, wenn auch der "ortsfeste" Amboß 17 und der "ortsfeste" Hammer 16 senkrecht von der Bezugsebene B weg bewegbar sind, um hierdurch zum Verfahren der Richteinrichtung 12 den Spalt S für die Scheibe 3 zu vergrößern, damit beim Verfahren Anlage- und Reibungskontakte zwischen der Scheibe 3 und den Funktionselementen der Richteinrichtung 12 vermieden werden. Erst unmittelbar vor jedem Richtvorgang werden die "orstfesten" Komponenten (16, 17) in die Bezugsebene B gefahren und fixiert.

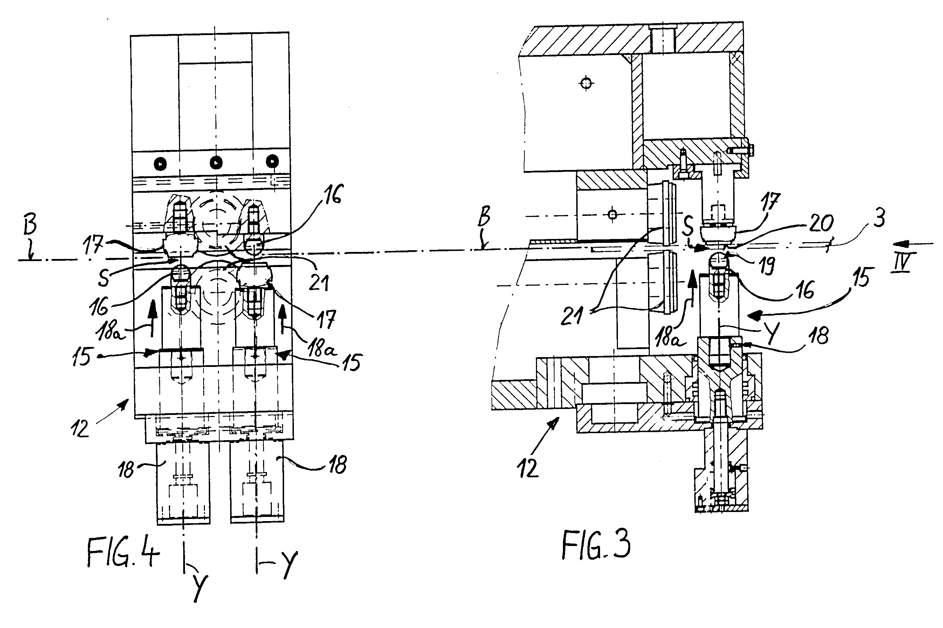

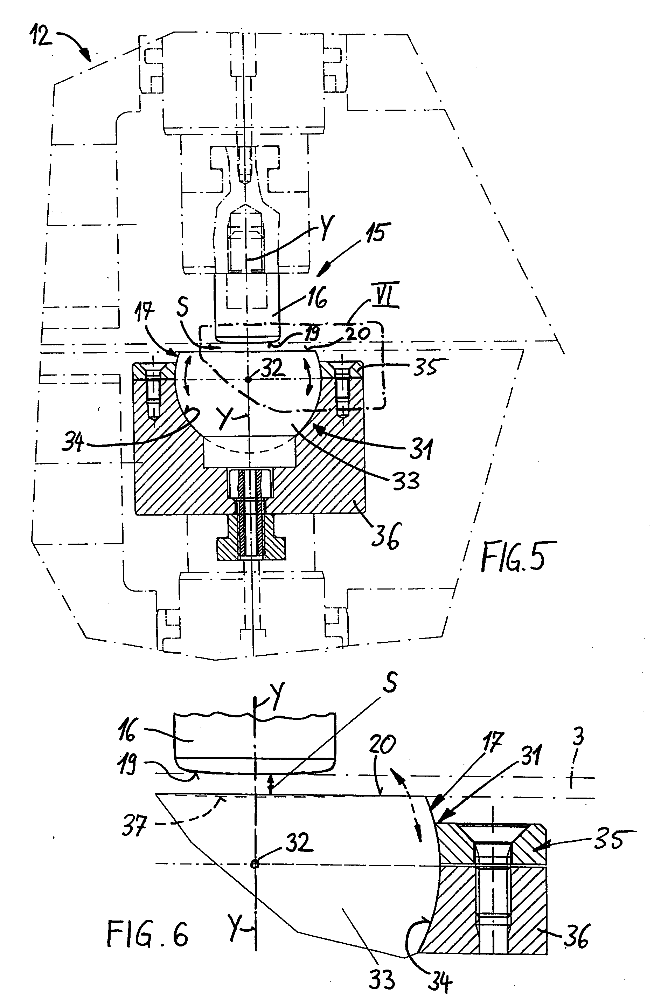

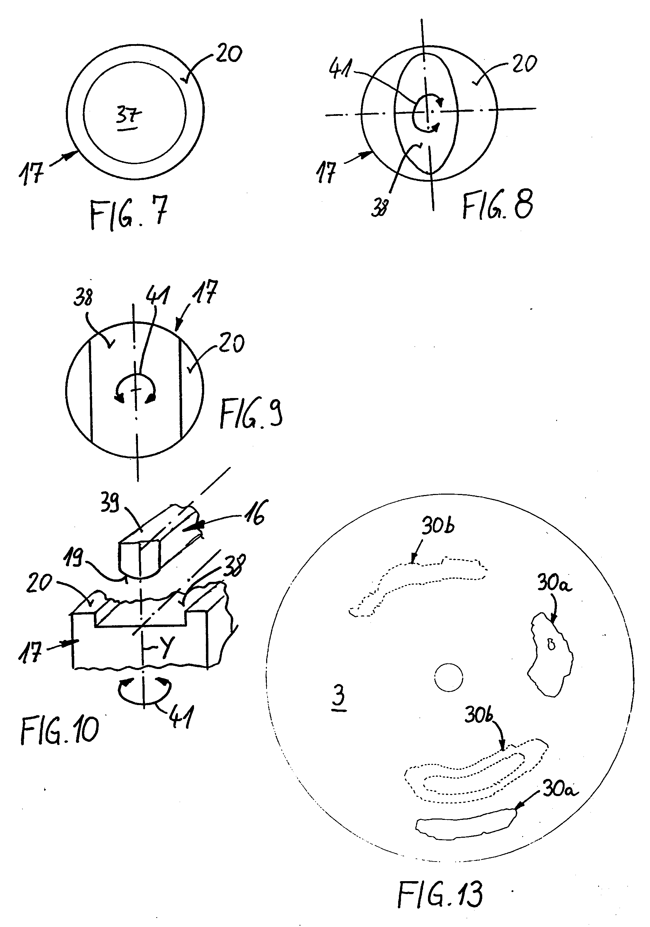

Weiterhin ist es zweckmäßig, wenn innerhalb der maschinellen Richteinheit 15 zusätzlich ein Walzenpaar 21 zum Spannungswalzen der Scheibe 3 vorgesehen ist (siehe insbesondere Fig. 3 und 4). Dieses Walzenpaar 21 ist derart angeordnet, daß die aufgespannte Scheibe 3 durch den zwischen den beiden Walzen 21 bestehenden Walzenspalt verläuft. In diesem Zusammenhang ist es zweckmäßig, wenn die erfindungsgemäße Richtmaschine eine motorisch verstellbare Auslenkeinrichtung 23 (Fig. 2) zur Spannungsprüfung der Scheibe 3 besitzt. Entsprechend der mit einem Meßsensor 24 (Fig. 2) gemessenen Auslenkung wird dann das Walzenpaar 21 motorisch mittels der Richteinrichtung 12 verfahren, wobei dies wiederum über die in der erfindungsgemäßen Richtmaschine vorhandene Steuereinheit automatisch erfolgt anhand der bei der Spannungsprüfung gemessenen Meßwerte. Die einzelnen Meßwerte werden zweckmäßigerweise auf dem Monitor 22 bildlich angezeigt, so daß auf dem Monitor die genaue Lage der Planheitsabweichungen erkannt werden kann, da auf diesem ebenfalls die Scheibe abgebildet wird.

In Fig. 13 ist beispielhaft die Scheibe 3 vor dem Planrichten veranschaulicht, und zwar mit den meßtechnisch ermittelten Planheitsabweichungen. Einerseits sind mit vollen Linien Planheitsabweichungen 30a veranschaulicht, die auf der dem Betrachter zugekehrten Seite Erhebungen bzw. auf der anderen Seite Vertiefungen bilden. Andererseits sind die gestrichelt eingezeichneten Planheitsabweichungen 30b "umgekehrt" orientiert, d.h. sie bilden Erhebungen auf der dem Betrachter abgekehrten Seite der Scheibe 3 bzw. Vertiefungen auf der dem Betrachter zugekehrten Seite. Zudem ist erkennbar, daß die Planheitsabweichungen 30a, 30b überwiegend eine "längliche" Kontur besitzen.

Im folgenden soll nun anhand der Fig. 5 bis 12 die erfindungsgemäße Ausgestaltung der Richteinheit 15 genauer erläutert werden. Demnach ist erfindungsgemäß der Amboß 17 und/oder der Hammer 16 - vorzugsweise nur der Amboß 17 - über ein Schwenklager 31 um mindestens eine zu der Bezugsebene B im wesentlichen parallele Schwenkachse 32 (nur in Fig. 5 und 6 jeweils eingetragen) frei verschwenkbar geführt. Hierdurch kann sich der Amboß 17 bzw. die Amboßfläche 20 exakt an die Lage der Scheibe 3 anpassen ("anschmiegen"), was zu einer sehr schonenden und exakten Planausrichtung führt.

In der Ausführungsform nach Fig. 5 und 6 ist das Schwenklager 31 derart als Kalottenlager mit einer Kugelkalotte 33 und einer diese aufnehmenden, an die Kugelkontur angepaßten Lagerfläche 34 ausgebildet, daß Schwenkbewegungen bzw. "Taumelbewegungen" um beliebige, in einer zur Bezugsebene B parallelen Ebene liegende Schwenkachsen 32 möglich sind. Bei dieser Ausführung sind zudem auch freie Drehbewegungen um die Wirkachse Y möglich. In der dargestellten, bevorzugten Ausführungsform ist die Amboßfläche 20 durch einen Kugelabschnitt der Kugelkalotte 33 gebildet. Die Lagerfläche 34 ist so ausgeführt, daß sie einen Bereich der Kugelkalotte 33 umfaßt, der größer als eine Halbkugel ist. Hierdurch wird gleichzeitig eine formschlüssige Halterung der Kugelkalotte 33 in der Lagerfläche 34 erreicht, wobei ein Teilbereich der Lagerfläche, der sich ausgehend von einer Halbkugel über diese hinaus in die entgegengesetzte Richtung erstreckt, Bestandteil eines Verschlußringes 35 ist. Dieser Verschlußring 35 ist lösbar mit dem anderen Lagerteil 36 verbunden, insbesondere verschraubt.

Es ist hierbei zweckmäßig, wenn der Amboß 17 in seiner Amboßfläche 20 eine zentrische bzw. koaxiale, vorzugsweise im wesentlichen kreisförmige, insbesondere geringfügig konkav gewölbte Vertiefung 37 aufweist. Eine entsprechende Draufsicht der Amboßfläche 20 mit dieser Vertiefung 37 ist in Fig. 7 dargestellt. Durch die Vertiefung 37 wird vorteilhafterweise erreicht, daß beim Planrichten mittels des Hammers 16 die Scheibe 3 geringfügig über die Planheit hinaus elastisch verformt werden kann, so daß sie sich nach elastischer Rückstellung genau in die Planheit ausrichtet. Zweckmäßigerweise besitzt hierbei der Hammer 16 eine - bezogen auf die Wirkachse Y - ebenfalls zentrische bzw. koaxiale, vorzugsweise im wesentlichen kreisförmige und insbesondere konvex gewölbte Hammerfläche 19.

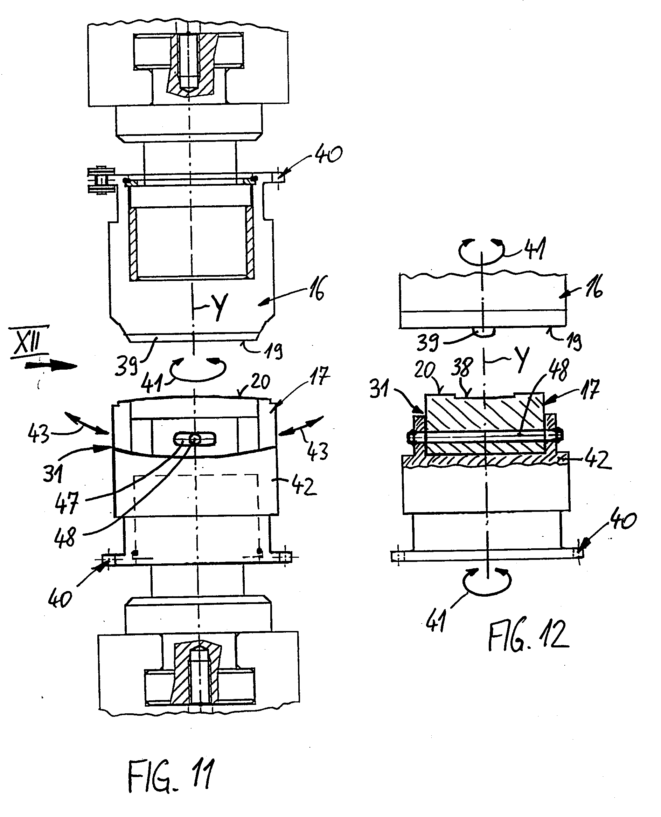

In der Ausführungsform nach Fig. 11 und 12 ist das Schwenklager 31 derart ausgebildet, daß im wesentlichen nur eine konkrete Schwenkbewegung um eine definierte, zur Bezugsebene B parallele Schwenkachse (in Fig. 11 und 12 nicht eingezeichnet) möglich ist. In dazu senkrechter Richtung ist allerdings eventuell ein leichtes Bewegungsspiel vorhanden. Bei dieser Ausführungsform weist der Amboß 18 in der Amboßfläche 20 eine längliche Flächenvertiefung 38 auf. Diese längliche Flächenvertiefung 38 kann gemäß Fig. 8 beispielsweise eine ovale Form aufweisen und hierbei konkav gewölbt oder stufig abgesetzt sein. Gemäß Fig. 9 ist die Flächenvertiefung 38 zwischen zwei randlichen, die eigentliche Amboßfläche 20 bildenden Stegen versenkt angeordnet. Diese Draufsicht in Fig. 9 entspricht im wesentlichen dem Schnitt in Fig. 12. Die die Amboßfläche 20 aufweisenden, seitlichen Stege können gemäß Fig. 11 in Richtung ihrer Längserstreckung leicht konvex gewölbt ausgebildet sein. Im Zusammenhang mit dieser länglichen Flächenvertiefung 38 der Amboßfläche 20 ist der Hammer 16 bevorzugt als längliche Hammerfinne 39 ausgebildert. Die Längserstreckungsrichtungen der Amboß-Flächenvertiefung 38 und der Hammerfinne 39 stimmen hierbei im wesentlichen überein, und sie verlaufen zu der Richtung der Schwenkachse im wesentlichen senkrecht. Im Zusammenhang mit dieser beschriebenen Ausgestaltung ist es nun wesentlich, daß der Amboß 17 und der Hammer 16 um die zur Bezugsebene B senkrechte Wirkachse Y zwangsweise über Stellmittel verdrehbar geführt sind. Dies ermöglicht vorteilhafterweise eine Ausrichtung der Längserstreckungsrichtungen der Hammerfinne 39 und der Flächenvertiefung 38 des Ambosses 17, und zwar zwecks Anpassung an den - gemäß Fig. 13 oftmals ebenfalls länglichen - Verlauf der zu beseitigenden Planheitsabweichung. Gemäß Fig. 11 und 12 sind der Hammer 16 und der Amboß 17 für die beschriebene Verdrehung beispielsweise mit jeweils einer Außenverzahnung 40 ausgestattet, mit der ein motorischer Antrieb, insbesondere ein Elektromotor, zwecks Verdrehung zusammenwirkt (vgl. die Doppelpfeile 41).

Gemäß Fig. 11 und 12 ist in dieser Ausführung vorzugsweise vorgesehen, daß das Schwenklager 31 aus einem ersten Lagerteil 42 mit einer in Schwenkbewegungsrichtung (Doppelpfeile 43) kreisbogenförmig konkav gekrümmten Lagerfläche 44 sowie aus einem zweiten Lagerteil 45 mit einer entsprechend kreisbogenförmig konvex gekrümmten Lagerfläche 46 besteht. Die beiden Lagerteile 42, 45 sind hierbei mit ihren aneinander- bzw. ineinanderliegenden Lagerflächen 44, 46 aneinander fixiert, und zwar bevorzugt über einen starr mit dem ersten Lagerteil 42 verbundenen und sich parallel zu der sich hieraus ergebenden Schwenkachse durch eine entsprechend der Schwenkbewegung gekrümmte Langlochausnehmung 47 des zweiten Lagerteils 45 erstreckenden Achsbolzen 48.

Durch die erfindungsgemäße Richtmaschine ist es möglich, sowohl Unebenheiten der Scheibe bzw. des Kreissägeblattes maschinell gesteuert zu beseitigen als auch gleichzeitig das Prüfen der Spannung des Sägeblattes sowie das Walzen zum notwendigen Korrigieren der Spannung vorzunehmen, ohne daß hierzu noch eine manuelle Bearbeitung des Kreissägeblattes erforderlich wäre.

## Patentansprüche

1. Richtmaschine zum Plan-Ausrichten von kreisförmigen Scheiben (3), insbesondere von Kreissägeblättern bzw. Stammblättern und dergleichen, mit einer Aufspannvorrichtung (2) für die Scheibe (3) sowie mindestens einer maschinellen Richteinheit (15), wobei die Richteinheit (15) aus einem Amboß (17) und einem Hammer (16) besteht, die zwischen sich einen Spalt (S) für die Scheibe (3) bilden und deren Wirkachse (Y) im wesentlichen senkrecht zu einer Bezugsebene (B) der Scheibe (3) verläuft,
**dadurch gekennzeichnet,** daß der Amboß (17) und/oder der Hammer (16) über ein Schwenklager (31) um mindestens eine zu der Bezugsebene (B) im wesentlichen parallele Schwenkachse (32) frei verschwenkbar geführt sind/ist.

2. Richtmaschine nach Anspruch 1,
**dadurch gekennzeichnet,** daß das Schwenklager (31) derart als Kalottenlager mit einer Kugelkalotte (33) und einer diese aufnehmenden Lagerfläche (34) ausgebildet ist, daß Schwenk- bzw. Taumelbewegungen um beliebige Schwenkachsen (32) möglich sind.

3. Richtmaschine nach Anspruch 1 oder 2,
**dadurch gekennzeichnet,** daß der Amboß (17) eine Amboßfläche (20) mit einer vorzugsweise im wesentlichen kreisförmigen, insbesondere konkav gewölbten Vertiefung (37) aufweist.

4. Richtmaschine nach einem oder mehreren der Ansprüche 1 bis 3,
**dadurch gekennzeichnet,** daß der Hammer (16) eine vorzugsweise im wesentlichen kreisförmige, insbesondere konvex gewölbte Hammerfläche (19) aufweist.

5. Richtmaschine nach einem oder mehreren der Ansprüche 2 bis 4,
**dadurch gekennzeichnet,** daß die Kugelkalotte (33) des Schwenklagers (31) im Bereich ihres Kugelabschnittes die Amboßfläche (20) bildet.

6. Richtmaschine nach Anspruch 1,
**dadurch gekennzeichnet,** daß das Schwenklager (31) derart ausgebildet ist, daß im wesentlichen nur eine konkrete Schwenkbewegung um eine definierte, zur Bezugsebene (B) parallele Schwenkachse möglich ist.

7. Richtmaschine nach Anspruch 6,
**dadurch gekennzeichnet,** daß der Amboß (17) eine Amboßfläche (20) mit einer länglichen Flächenvertiefung (38) aufweist.

8. Richtmaschine nach Anspruch 6 oder 7,
**dadurch gekennzeichnet,** daß der Hammer (16) eine als längliche Hammerfinne (39) ausgebildete Hammerfläche (19) aufweist.

9. Richtmaschine nach Anspruch 7 und 8,
**dadurch gekennzeichnet,** daß der Amboß (17) und der Hammer (16) relativ zueinander derart ausgerichtet sind, daß die Längserstreckungsrichtungen der Amboß-Fächenvertiefung (38) und der Hammerfinne (39) im wesentlichen übereinstimmen.

10. Richtmaschine nach einem oder mehreren der Ansprüche 6 bis 9,
**dadurch gekennzeichnet,** daß die Längserstreckungsrichtungen der Amboß-Flächenvertiefung (38) und der Hammerfinne (39) zu der Richtung der Schwenkachse im wesentlichen senkrecht verlaufen.

11. Richtmaschine nach einem oder mehreren der Ansprüche 6 bis 10,
**dadurch gekennzeichnet,** daß der Amboß (17) und der Hammer (16) um die zur Bezugsebene (B) senkrechte Wirkachse (Y) zwangsweise über Stellmittel verdrehbar geführt sind.

12. Richtmaschine nach einem oder mehreren der Ansprüche 6 bis 11,
**dadurch gekennzeichnet,** daß das Schwenklager (31) aus einem ersten Lagerteil (42) mit einer in Schwenkbewegungsrichtung (Doppelpfeile 43) kreisbogenförmig gekrümmten Lagerfläche (44) und einem zweiten Lagerteil (45) mit einer entsprechend kreisbogenförmig gekrümmten Lagerfläche (46) besteht, wobei die beiden Lagerteile (42,45) über einen starr mit dem ersten Lagerteil (42) verbundenen und sich parallel zu der Schwenkachse durch eine entsprechend der Schwenkbewegung gekrümmte Langlochausnehmng (47) des zweiten Lagerteils (45) erstreckenden Achsbolzen (48) zusammengehalten sind.

13. Richtmaschine nach einem oder mehreren der Ansprüche 1 bis 12,
**dadurch gekennzeichnet,** daß die Richteinheit (15) relativ zu der Scheibe (3) verschiebbar geführt ist.

14. Richtmaschine nach einem oder mehreren der Ansprüche 1 bis 13,
**dadurch gekennzeichnet,** daß eine Meßvorrichtung (7) für die Messung der Planheit der Scheibe (3) derart vorgesehen ist, daß die Koordinaten der Planheitsabweichungen in Karthesischen- oder Polar-Koordinaten gemessen und angezeigt werden.

15. Richtmaschine nach Anspruch 14,
**dadurch gekennzeichnet,** daß die gemessenen Koordinaten der Planheitsabweichungen der Scheibe (3) in einer elektronischen Speichereinheit gespeichert werden.

16. Richtmaschine nach Anspruch 15,
**dadurch gekennzeichnet,** daß über die elektronische Speichereinheit die maschinelle Richteinheit (15) sowie die Aufspannvorrichtung (2) der Scheibe (3) derart ansteuerbar sind, daß die maschinelle Richteinheit (15) auf die gemessenen Koordinaten der Planheitsabweichungen unter gleichVerdrehen der Scheibe (3) einstellbar ist.

17. Richtmaschine nach einem oder mehreren der Ansprüche 14 bis 16,
**dadurch gekennzeichnet,** daß die Meßvorrichtung (7) zum Messen der Planheit der Scheibe (3) aus einem Meßkopf (8) mit einer Laser-Meßeinheit besteht, der verschiebbar auf einer motorisch angetriebenen Spindel (9) in radialer Richtung der Scheibe (3) geführt ist.

18. Richtmaschine nach einem oder mehreren der Ansprüche 1 bis 17,
**dadurch gekennzeichnet,** daß zwei maschinelle Richteinheiten (15) vorgesehen sind, wobei die Hämmer (16) und die Ambosse (17) der beiden Richteinheiten (15) jeweils kinematisch umgekehrt angeordnet sind.

19. Richtmaschine nach einem oder mehreren der Ansprüche 1 bis 18,
**dadurch gekennzeichnet,** daß die bzw. jede maschinelle Richteinheit (15) an einer Richteinrichtung (12) befestigt ist, die auf einer Spindel (13) verfahrbar gelagert ist, wobei der Verschiebeweg der Richteinheit (15) auf einer Verschiebegeraden (Z) durch die Drehachse (X) der Scheibe (3) liegt.

## Claims

1. Straightening machine for flattening and straightening circular discs (3), in particular circular saw blades or sawblade bodies and the like, having a clamping device (2) for the disc (3) and at least one mechanical straightening unit (15), the straightening unit (15) comprising an anvil (17) and a hammer (16), which between them form a gap (S) for the disc (3) and the working axis (Y) of which runs essentially perpendicular to a reference plane (B) of the disc (3), characterized in that the anvil (17) and/or the hammer (16) is/are guided such that they can be pivoted, by means of a swivel bearing (31), about at least one pivot pin (32) which is essentially parallel to the reference plane (B).

2. Straightening machine according to Claim 1, characterized in that the swivel bearing (31) is designed as a spherical cap bearing with a spherical cap (33) and a bearing surface (34) receiving the latter, in such a way that pivoting and/or gyrating movements about any desired pivot pins (32) are possible.

3. Straightening machine according to Claim 1 or 2, characterized in that the anvil (17) has an anvil surface (20) with a recess (37) which is preferably essentially circular, in particular concavely curved.

4. Straightening machine according to one or more of Claims 1 to 3, characterized in that the hammer (16) has a hammer surface (19) which is preferably essentially circular, in particular convexly curved.

5. Straightening machine according to one or more of Claims 2 to 4, characterized in that the spherical cap (33) of the swivel bearing (31) forms the anvil surface (20) in the region of its spherical section.

6. Straightening machine according to Claim 1, characterized in that the swivel bearing (31) is designed in such a way that essentially only a concrete pivoting movement about a defined pivot pin which is parallel to the reference plane (B) is possible.

7. Straightening machine according to Claim 6, characterized in that the anvil (17) has an anvil surface (20) with an elongate recess (38) on the surface.

8. Straightening machine according to Claim 6 or 7, characterized in that the hammer (16) has a hammer surface (19) which is designed as an elongate hammer peen (39).

9. Straightening machine according to Claims 7 and 8, characterized in that the anvil (17) and the hammer (16) are aligned relative to one another in such a manner that the directions in which the anvil surface recess (38) and the hammer peen (39) extend longitudinally essentially coincide.

10. Straightening machine according to one or more of Claims 6 to 9, characterized in that the directions in which the anvil surface recess (38) and the hammer peen (39) extend longitudinally run essentially perpendicular to the direction of the pivot pin.

11. Straightening machine according to one or more of Claims 6 to 10, characterized in that the anvil (17) and the hammer (16) are guided such that they can be forced to rotate by means of adjustment means about the working axis (Y) which is perpendicular to the reference plane (B).

12. Straightening machine according to one or more of Claims 6 to 11, characterized in that the swivel bearing (31) comprises a first bearing part (42) with a bearing surface (44) which is curved in the form of an arc of a circle in the direction of pivoting movement (double arrows 43) and a second bearing part (45) with a bearing surface (46) which is correspondingly curved in the form of an arc of a circle, the two bearing parts (42, 45) being held together by means of an axle bolt (48) which is rigidly connected to the first bearing part (42) and extends parallel to the pivot pin through a slot (47), which is curved in the direction of the pivoting movement, in the second bearing part (45).

13. Straightening machine according to one or more of Claims 1 to 12, characterized in that the straightening unit (15) is guided displaceably with respect to the disc (3).

14. Straightening machine according to one or more of Claims 1 to 13, characterized in that a measuring device (7) for measuring the planarity of the disc (3) is provided, such that the coordinates of the planarity deviations are measured and displayed in Cartesian or polar coordinates.

15. Straightening machine according to Claim 14, characterized in that the coordinates measured for the planarity deviations of the disc (3) are stored in an electronic memory unit.

16. Straightening machine according to Claim 15, characterized in that the electronic memory unit can be used to control the mechanical straightening unit (15) and the clamping device (2) for the disc (3) in such a manner that the mechanical straightening unit (15) can be adjusted to the coordinates measured for the planarity deviations while simultaneously twisting the disc (3).

17. Straightening machine according to one or more of Claims 14 to 16, characterized in that the measuring device (7) for measuring the planarity of the disc (3) comprises a measuring head (8) with a laser measuring unit, which measuring head is guided displaceably on a motor-driven spindle (9) in the radial direction of the disc (3).

18. Straightening machine according to one or more of Claims 1 to 17, characterized in that two mechanical straightening units (15) are provided, the hammers (16) and the anvils (17) of the two straightening units (15) each being arranged in a kinematically inverted manner.

19. Straightening machine according to one or more of Claims 1 to 18, characterized in that the or each mechanical straightening unit (15) is attached to a straightening device (12) which is movably mounted on a spindle (13), the displacement path of the straightening unit (15) lying on a straight line (Z) of displacement running through the axis of rotation (X) of the disc (3).

## Revendications

1. Machine à planer pour redresser et planer des disques de forme circulaire (3), notamment des lames de scies circulaires ou des lames mères et analogues, comportant un dispositif de serrage (2) pour le disque (3) ainsi qu'au moins une unité de planage mécanique (15), cette unité (15) étant constituée d'une enclume (17) et d¹un marteau (16) lesquels présentent entre eux un interstice (S) pour le disque (3) et dont l'axe utile (Y) s'étend sensiblement perpendiculairement à un plan de référence (B) du disque (3), caractérisée en ce que l'enclume (17) et/ou le marteau (16) peuvent/peut, au moyen d'un palier oscillant (31), pivoter librement autour d'au moins un axe de pivotement (32) sensiblement parallèle au plan de référence (a).

2. Machine à planer selon la revendication 1 caractérisée en ce que le palier oscillant (31) est réalisé sous la forme d'un palier-calotte comportant une calotte sphérique (33) et une face d'appui (34) recevant cette calotte, de manière à rendre possibles des mouvements de basculement ou d'oscillation autour d'axes de pivotement quelconques (32).

3. Machine à planer selon les revendications 1 ou 2 caractérisée en ce que l'enclume (17) présente une face d'enclume (20) munie d'une encoche (37) de préférence de forme sensiblement circulaire, notamment bombée concave.

4. Machine à planer selon l'une ou plusieurs des revendications 1 à 3, caractérisée en ce que le marteau (16) présente une face de martelage de préférence de forme circulaire, notamment bombée convexe.

5. Machine à planer selon l'une ou plusieurs des revendications 2 à 4, caractérisée en ce que la calotte sphérique (33) du palier oscillant (31) forme la face d'enclume (20) dans la région de sa section sphérique.

6. Machine à planer selon la revendication 1, caractérisée en ce que le palier oscillant (31) est réalisé de telle sorte à ne rendre possible pratiquement qu'un seul mouvement pivotant concret autour d'un axe de pivotement défini, parallèle au plan de référence (B).

7. Machine à planer selon la revendication 6, caractérisée en ce que l'enclume (17) présente une face d'enclume (20) comportant une encoche plane oblongue (38).

8. Machine à planer selon les revendications 6 ou 7, caractérisée en ce que le marteau (16) présente une face de martelage (19) réalisée en forme de panne oblongue (39).

9. Machine à planer selon les revendications 7 et 8 caractérisée en ce que l'enclume (17) et le marteau (16) sont alignés l'un par rapport à l'autre, de telle manière que les directions d'extension longitudinale de l'encoche plane (38) de l'enclume et de la panne (39) du marteau coïncident sensiblement.

10. Machine à planer selon l'une ou plusieurs des revendications 6 à 9, caractérisée en ce que les directions d'extension longitudinale de l'encoche plane (38) de l'enclume et de la panne (39) du marteau s'étendent sensiblement perpendiculairement à la direction de l'axe de pivotement.

11. Machine à planer selon l'une ou plusieurs des revendications 6 à 10, caractérisée en ce que l'enclume (17) et le marteau (16) peuvent tourner autour de l'axe utile (Y) perpendiculaire au plan de référence (B) en faisant obligatoirement appel à des moyens de réglage.

12. Machine à planer selon l'une ou plusieurs de revendication 6 à 11, caractérisée en ce que le palier pivotant (31) est constitué d'un premier élément de palier (42) à face d'appui (44) courbée en forme d'arc de cercle dans le sens du mouvement de pivotement (doubles flèches (43) et d'un deuxième élément de palier (45) à face d'appui (46) courbée en forme d'arc de cercle correspondant, ces deux éléments de palier (42,45) étant maintenus ensemble par un boulon (48) relié rigidement au premier élément de palier (42) et s'étendant parallèlement à l'axe de pivotement à travers un évidement en forme de trou oblong (47), recourbé pour tenir compte du mouvement de basculement pratiqué dans le deuxième élément de palier (45).

13. Machine à planer selon l'une ou plusieurs des revendications 1 à 12 caractérisée en ce que l'unité (15) est coulissable par rapport au disque (3).

14. Machine à planer selon l'une ou plusieurs des revendications 1 à 13, caractérisée par la présence d'un dispositif de mesure (7) destiné à mesurer la planéité du disque (3) de telle manière que les coordonnés des écarts de planéité sont mesurés et indiqués sur des coordonnées cartésiennes ou polaires.

15. Machine à planer selon la revendication 14, caractérisée en ce que les coordonnées mesurées des écarts de planéité du disque (3) sont mémorisées dans une mémoire électronique.

16. Machine à planer selon la revendication 15, caractérisée en ce qu'au moyen de la mémoire électronique l'unité de planage mécanique, ainsi que le dispositif du serrage (2) du disque (3), sont régulables de telle manière que l'unité de dressage mécanique (15) puisse être réglée sur les coordonnées mesurées des écarts de planéité avec rotation simultanée du disque (3).

17. Machine à planer selon l'une ou plusieurs des revendications 14 à 16, caractérisée en ce que le dispositif de mesure (7) destiné à mesurer la planéité du disque (3) est constitué d'une sonde (8) équipée d'une cellule de mesure à laser qui est guidée de manière coulissante sur une broche motorisée (9) en direction radiale du disque (3).

18. Machine à planer selon l'une ou plusieurs des revendications 1 à 17, caractérisée par la présence de deux unités de planage mécaniques (15), les marteaux (16) et les enclumes (17) des deux unités (15) étant disposés de telle manière que leurs mouvements respectifs sont inversés.

19. Machine à planer selon l'une ou plusieurs des revendications 1 à 18, caractérisée en ce que la ou chaque unité de planage mécanique (15) est fixée sur un dispositif de planage (12) qui est monté de manière mobile sur une broche (13), le trajet de coulissement de l'unité de planage (15) se situant sur une droite (Z) qui traverse l'axe de rotation (X) du disque (3).
